# FASCICULE DE BREVET EUROPEEN

(11) **EP 0 316 700 B1**
(45) Date de publication et mention de la délivrance du brevet: **24.02.1993**
(21) Numéro de dépôt: 88118499.8
(22) Date de dépôt: 07.11.1988
(51) Int. Cl.: G06K 7/06

(54) **Cadre de contact pour lecteur de carte à puce**
Kontaktrahmen für I.S.-Kartenleser
Contact frame for an IC card reader

(30) Priorité: 13.11.1987 FR 8715739
(43) Date de publication de la demande: 24.05.1989
(73) Titulaire: CONNECTORS PONTARLIER, F-92400 COURBEVOIE (FR)
(72) Inventeur: Lange, François, F-25300 Pontarlier (FR); Pernet, Michel, F-25300 Pontarlier (FR)
(74) Mandataire: Pothet, Jean Rémy Emile Ludovic

(56) Documents cités:
- EP-A- 0 131 410
- EP-A- 0 231 409
- DE-A- 3 442 397
- DE-U- 8 529 580
- FR-A- 2 578 072
- GB-A- 2 124 420
- PATENT ABSTRACTS OF JAPAN, vol. 10, no. 22 (P-424)[2079], 28 janvier 1986, page 28 P 424 & JP-A-60-173 789
- "Siemens IC-Kartenleser 2000", prospectus, juillet 1985

## Description

La présente invention concerne les lecteurs de carte à puce. On entend par carte à puce des cartes incluant au moins un composant électronique, avec lequel des connexions électriques doivent être établies, dans un lecteur équipant un appareil exploité au moyen de ce genre de carte (terminal bancaire ou taxiphone, par exemple).

Les lecteurs de carte à puce comprennent, d'une manière générale, des moyens de guidage ou de positionnement de carte, éventuellement des moyens servant à vérifier qu'une carte est présente dans le lecteur, dans la position adéquate, ainsi que des éléments de contact qui assurent le raccordement électrique avec des plages conductrices de la carte à puce et par lesquels sont établis des circuits intéressant l'appareil incorporant le lecteur de carte à puce.

Un tel lecteur de carte à puce fait l'objet du brevet français n° 2 534 713 . Les moyens de guidage y sont des surfaces associées à la structure du lecteur. La vérification de la présence de la carte s'effectue par un microcontact de fin de course et les éléments de contact sont les lames de métal élastiques montées dans un cadre en matière isolante.

On se trouve ainsi en présence de trois pièces respectivement séparées sont l'assemblage n'est pas détaillé. Or, telle solution exige l'assemblage précis des différentes pièces, ce qui non seulement est coûteux, mais peut conduire, compte tenu des tolérances de montage cumulées des différentes pièces, à l'impossibilité matérielle de satisfaire aux exigences de l'exploitant. De plus, l'assemblage lui-même est laissé au constructeur de l'appareil, alors que pour celui-ci, le recours à un composant unitaire ne demandant aucune précaution d'emploi serait une facilité appréciée.

Plus précisément, la force exercée par chacun des éléments de contact de raccordement à la carte à puce sur une plage conductrice de la carte s'exprime par une formule du type f = kx, dans laquelle k représente les caractéristiques élastiques de l'élément de contact et x la déflexion subie par cet élément de contact en présence d'une carte. Cette force f doit être obtenue de façon relativement précise, c'est-à-dire avec des tolérances relativement étroites, parce que, si elle est trop faible, il apparaît des problèmes de résistance de contact et. si elle est trop forte, il apparaît des problèmes d'usure des éléments de contact et des cartes. De plus, la force exercée collectivement par les éléments de contact sur la carte induit une force de rétention de la carte dans l'appareil qui fait également l'objet de tolérances étroites. Or, la valeur de k peut, dans le cours d'une fabrication industrielle, varier, par exemple, de +/-25%. On pourrait certes réduire cette variation tolérée à une moindre valeur, mais cela demanderait des mesures coûteuses. Si l'on veut que la force f se tienne dans des limites qui ne soient pas beaucoup plus larges que celles que l'on accorde au facteur k, il ne resta plus qu'a définir x de la façon la plus étroite possible. Cela revient à dire que le positionnement précis de la carte par rapport aux éléments de contact est d'une importance déterminante.

Les mêmes considérations s'appliquent au lecteur de carte à puce décrit dans le document EP-A- 0 231 409, lequel comporte deux parties, l'une, un circuit imprimé, dont les extrémités fixes des éléments de contact sont solidaires et une autre, dite partie médiane, qui guide ces éléments de contact par le moyen d'une série de fentes dans lesquelles s'engagent les extrémités libres des éléments de contact. Cette dernière partie porte aussi des moyens pour définir la position de glissières de guidage. Le guidage des éléments de contact ne s'exerce que dans le sens latéral, par rapport à l'axe d'introduction de la carte et parallèlement au plan de celle-ci. Il en résulte que le positionnement respectif des éléments de contact et de la carte dépend encore des tolérances de dimensionnement et d'assemblage de plusieurs parties, ce qui est critiquable, comme on l'a vu.

On connaît également, par le document de brevet DE 34 42 397 A1 et par le produit dénommé IC-Kartenleser 2000 de la société SIEMENS, un lecteur de carte à puce comprenant une plaque, autour d'éléments de contact, et des extensions définissant la position de glissières de guidage de la carte.

Dans ce lecteur, la plaque et toutes les pièces qui s'y rattachent, y compris les éléments de contact et une plaque à circuits imprimés à laquelle ils sont soudés, constitue un ensemble mobile entraîné en translation par la carte insérée, à l'encontre de ressorts de rappel. Cet ensemble mobile comprend un coulisseau qui gouverne la position des éléments de contact.

Le positionnement des éléments de contact n'est pas déterminé avec précision par un cadre de contact, mais par l'action du coulisseau. Il est donc imprécis, étant donné le nombre de pièces interposées et le fait que ces pièces sont mobiles, ce qui rend nécessaire un certain jeu, lequel augmente avec l'usure.

Le positionnement de la carte n'est pas non plus déterminé avec précision, les glissières fournissant un guidage transversal seulement.

En fait, ces dispositions ne procurent pas et d'ailleurs ne cherchent pas à procurer un positionnement respectif précis de la carte par rapport aux éléments de contact, puisqu'un mécanisme est prévu pour déplacer les contacts vers la carte, solution performante, mais coûteuse.

L'invention, s'écartant de ces solutions commes, a donc pour objet un lecteur de carte à puce conforme au préambule de la revendication indépendant, résolvant le problème des tolérances d'assemblage et permettant de satisfaire les exigences de positionnement de la carte les plus sévères, pour un moindre coût, ce lecteur étant d'une grande facilité d'emploi.

Le lecteur de carte à puce selon la présente invention est défini par la revendication indépendante.

Il se caractérise par le fait qu'il comprend, prolongeant la matière d'un cadre intérieur moule sur les éléments de contact de raccordement électrique à la carte à puce, deux ailes qui s'étendent latéralement dans la direction des bords latéraux de la carte et vont au-delà de ces bords, ces deux ailes portant chacune des moyens pour définir la position des deux glissières de guidage de la carte.

De préférence ces ailes sont ajourées. La glissière est formée, pour partie au moins dans la matière de chaque aile. Elle peut être, pour partie au moins rapportée sur chaque aile. Une pièce rapportée formant couvercle peut s'étendre d'une glissière à l'autre. Un frein plaquant la carte contre la pièce rapportée peut être incorporé soit au cadre de contact, soit à son couvercle. Le cadre porte enfin un contact de fin de course dont les éléments sont insérés dans le cadre.

Les différents objets et caractéristiques de la présente invention seront maintenant exposés dans de plus amples détails dans la description qui va suivre, faite à titre d'exemple non limitatif, en se reportant aux figures annexées qui représentent :
- la figure 1, une vue en perspective d'un cadre de contact conforme à la présente invention,
- la figure 2, une vue en plan du cadre de la figure 1,
- la figure 3, une vue de bout du cadre de la figure 1, avec un couvercle formant les glissières de guidage de la carte,
- la figure 4, une vue de bout partielle avec des glissières formées partiellement sur le cadre et sur le couvercle,
- la figure 5, une vue latérale du cadre de la figure 3,

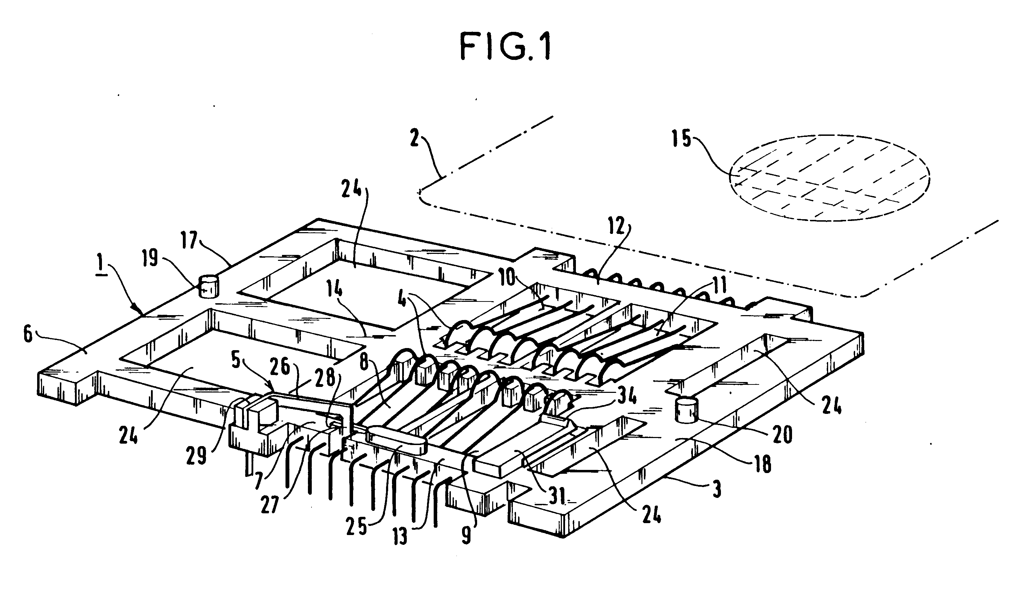

On a représenté, à la figure 1, vu en perpespective, un cadre de contact 1 conçu conformément à la présente invention, avec une carte à puce 2, en position d'insertion. Pour les besoins de la description, ces deux pièces sont représentées à l'envers, par rapport à leur position naturelle, dans laquelle la carte est présentée avec sa zone de contact sur le dessus et dans laquelle le cadre de contact 1 doit se trouver au-dessus de la carte et tourné vers elle. Ce cadre comprend essentiellement une pièce en matière moulée isolante 3 jouant tout à la fois le rôle de support d'éléments de contact 4, servant au raccordement à la puce de la carte 2, de support d'un contact de fin de course 5, indiquant qu'une carte est présente dans le lecteur et qu'elle est en position adéquate pour être lue, et, au moins, de support de glissières 6, servant au guidage de la carte et destinées à la conduire dans la position adéquate indiquée.

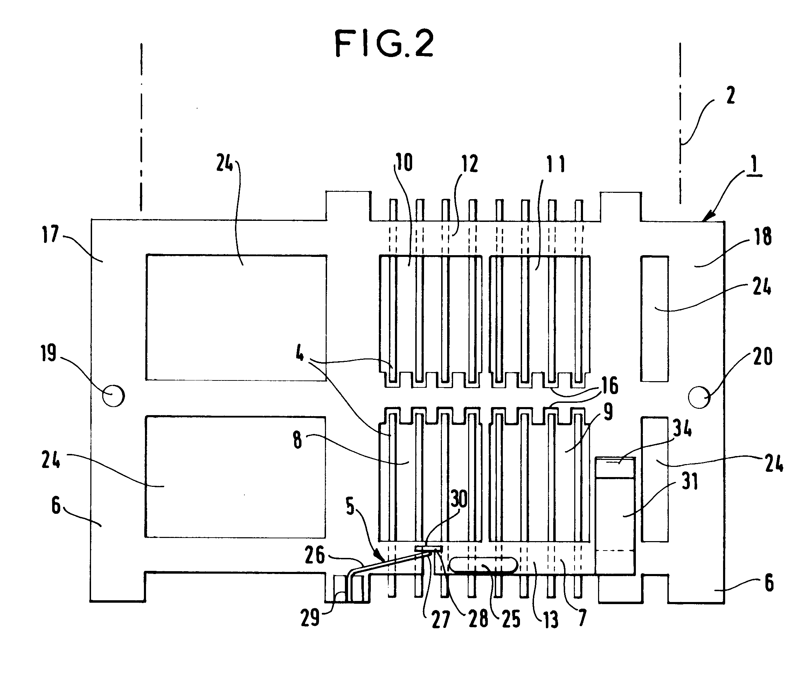

A cette fin, le cadre de contact 1 comprend un cadre intérieur 7 constitué par les parties du cadre 1 délimitant les fenêtres de raccordement 8, 9, 10, 11. Les éléments de contact 4 s'étendent dans ces fenêtres, à partir des barreaux 12, 13 dans lesquels ils sont surmoulés. On conçoit donc que la position des éléments de contact 4 est déterminée par celle d'une partie du moule de formation du cadre 1. Les éléments de contact 4 sont profilés et font saillie au-dessus du plan 14 de la surface du cadre 1. Ils doivent venir en contact avec les plages de contact de la zone de raccordement 15 de la carte 1, lorsque celle-ci est correctement insérée dans le lecteur de carte à puce. En se reportant à la figure 2 qui est une vue en plan du cadre de contact de la figure 1, on voit que les fenêtres 8 à 11 comprennent des indentations 16 qui protègent les extrémités des éléments de contact 4.

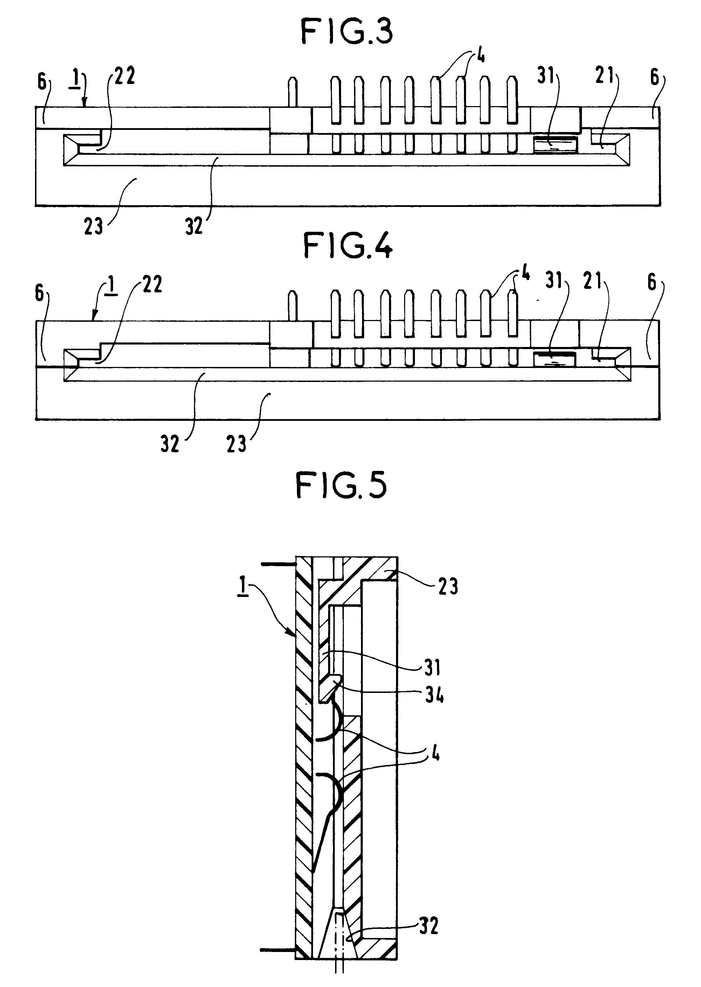

Ce cadre intérieur 7, comme on le voit aux figures 1 et 2, est prolongé par deux ailes 17, 18 qui se terminent, à l'opposé du cadre intérieur 7, par des supports de glissières 6. Dans un première forme de réalisation, ces supports 6 sont de simples surfaces plates, dotées au moins d'un pied de centrage 19, 20. D'autres moyens de positionnement de glissières pourraient être prévus, à la place ou en addition à ceux que l'on vient d'indiquer. Par ailleurs, des pieds de centrage tels que ceux des figures 1 et 2 peuvent également servir de moyens de fixation (par rivetage, par exemple) des glissières. On se reportera à la figure 3 qui représente une vue de bout du cadre 1 des figures 1 et 2, dans sa position naturelle, cette fois. On y voit que les glissières 21 et 22 sont formées toutes les deux dans une pièce en matière isolante moulée 23 formant couvercle et qui est montée sur les supports 6 du cadre 1. Cette pièce 23 est précisément positionnée par rapport au cadre 1 par les pieds de centrage 19, 20. Elle guide la carte 2 dont elle enserre les bords. Si la même partie de moule que celle qui définit la position des éléments de contact 4 définit également les surfaces 6 et les pieds de centrage 19, 20, la précision dans la localisation de la carte 2 par rapport aux éléments de contact 4 n'est plus tributaire que du soin apporté à la réalisation du moule servant à former le cadre 1 et des tolérances de l'assemblage du cadre 1 et de la pièce 23, lequel peut être réalisé en usine, c'est-à-dire avec des tolérances étroites.

Comme on peut le voir aux figures 1 et 2, les ailes 17, 18 sont avantageusement ajourées, pour économiser la matière, par des évidements 24.

Le cadre de contact 1 porte encore le contact de fin de course 5 et une butée de fin de course 25. Ce contact de fin de course 5 est un contact de repos, s'ouvrant lorsque la carte, peu avant de venir en apui sur la butée de fin de course 25, actionne la lame mobile 26 en appuyant sur son extrémité 27, ce qui la sépare de la lame de contact fixe 28. Les deux lames sont insérées à force dans des fentes 29, 30 du cadre 1, ce qui assure la précision de leur positionnement. Par ailleurs, la butée 25 assure le positionnement correct de la carte dans le lecteur de carte à puce.

On voit enfin, aux figures 1 et 2, un poussoir 31, venu de la matière du cadre 1 et qui est une lame élastique destinée à presser la carte à puce 2 vers le couvercle 23, ce qui la plaque contre la face de la glissière opposée aux éléments de contact et définit ainsi de façon plus précise sa distance par rapport aux éléments de contact 4.

Ce poussoir, comme l'illustrent les figures 3, 4 et 5, peut également être formé dans la matière de la pièce 23, à partir de son extrémité que n'atteint pas la carte, revenant en porte-à-faux vers le centre du cadre 1. Son extrémité 34 est profilée de manière à ce qu'il s'efface devant le bord avant de la carte 2, puis exerce sur celle-ci une pression par une surface arrondie, afin d'éviter de la détériorer.

On remarquera accessoirement que l'ouverture pour l'insertion de la carte à puce entre les pièces 1 et 23 est chanfreinée, en 32, comme il est d'usage.

Il reste à considérer, en se reportant aux figures 3 et 4, que la glissière prévue de chaque côté du cadre peut être au moins partiellement formée dans le cadre 1, comme on peut le voir à la figure 4. On aboutit alors à un lecteur de carte à puce dans lequel toutes les tolérances dimensionnelles renvoient à une pièce moulée unique, solution à la fois performante et économique. Les glissières peuvent cependant être au moins partiellement formées dans des pièces rapportées, ou, de préférence, dans une pièce rapportée unique formant couvercle, comme le représente la figure 3 par exemple. Dans la mesure où cette pièce peut elle-même être montée sur le cadre 1 lors de la fabrication de ce dernier, le respect de tolérances étroites peut encore être assuré dans des conditions économiques.

## Revendications

1. Lecteur de carte à puce comprenant :
- un cadre de contact formant un cadre intérieur (7) pourvu de fenêtres (8, 9, 10), en une matière isolante qui est moulée sur des éléments de contact (4) de raccordement électrique à la carte à puce, de façon à les positionner dans lesdites fenêtres, et
- des glissières de guidage (21, 22) enserrant les bords de la carte et la positionnant par rapport aux éléments de contact dans le sens de la déflexion subie par les éléments de contact à l'insertion de la carte, ainsi que dans le sens transversal, **caractérisé en ce que** le cadre de contact (1) comprend en outre deux ailes (17, 18) prolongeant la matière dudit cadre intérieur (7), qui s'étendent latéralement dans la direction des bords latéraux de la carte et vont au-delà de ces bords, ces deux ailes portant chacune des moyens (6, 19, 20) pour défini la position des deux glissières de guidage (21, 22).

2. Lecteur de carte à puce conforme à la revendication 1, caractérisé en ce que les ailes (17, 18) sont au moins partiellement ajourées.

3. Lecteur de carte à puce conforme à la revendication 1 ou 2, caractérisé en ce que les glissières (21, 22) sont formées dans la matière dudit cadre de contact (1).

4. Lecteur de carte à puce conforme à la revendication 1 ou 2, caractérisé en ce que les glissières (21, 22) sont formées par une partie rapportée sur chaque aile 17 ou 18).

5. Lecteur de carte à puce conforme à la revendication 1 ou 2, caractérisé en ce que les glissières (21, 22) sont formées partiellement dans la matière dudit cadre de contact (1) et partiellement dans une partie rapportée sur chaque aile.

6. Lecteur de carte à puce conforme à la revendication 4 ou 5, caractérisé en ce que lesdites parties rapportées font partie d'une pièce (23) recouvrant ledit cadre et formant couvercle assemblé sur celui-ci.

7. Lecteur de carte à puce conforme aux revendications 4 et 6, caractérisé en ce que les glissières (21, 22) sont totalement formées dans la partie rapportée faisant couvercle (23).

8. Lecteur de carte à puce conforme à l'une quelconque des revendications 1 à 7, caractérisé en ce que ledit cadre de contact (1) porte une pièce élastique allongée (31), pourvue d'une extrémité profilée (34) s'effaçant devant le bord avant d'une carte insérée dans le lecteur, puis appuyant sur la carte et pressant celle-ci contre ledit couvercle (23).

9. Lecteur de carte à puce conforme à la revendication 8, caractérisé en ce que ladite pièce élastique allongée (31) est disposée entre les éléments de contact (4) et le bord de la carte le plus proche de ceux-ci.

10. Lecteur de carte à puce conforme à l'une quelconque des revendications 1 à 7, caractérisé en ce que ledit couvercle (23)porte une pièce élastique allongée (31), s'étendant en arrière, depuis le bord avant que n'atteint pas la carte, pourvue d'une extrémité profilée (34) s'effaçant devant le bord avant d'une carte insérée dans le lecteur, puis appuyant sur la carte et pressant celle-ci contre ledit couvercle (23).

11. Lecteur de carte à puce conforme à la revendication 10, caractérisé en ce que ladite pièce élastique allongée est fixée au couvercle de façon à se trouver entre les éléments de contact (4) et le bord de la carte le plus proche de ceux-ci.

12. Lecteur de carte à puce conforme à l'une quelconque des revendications précédentes, caractérisé en ce que ledit cadre de contact (1) porte une lame de contact mobile (26) et une lame de contact fixe (28) d'un contact de fin de course (5) disposé sur le bord avant dudit cadre que n'atteint pas la carte, sauf pour une partie de la lame mobile sur laquelle vient appuyer la carte lorsqu'elle arrive en fin de course.

## Claims

1. An IC card reader comprising:
- a contact frame constituting an inner frame (7) provided with windows (8, 9, 10) made of an insulating substance which is molded onto contact elements (4) for electrical connection with the IC card, so as to position them in said windows, and
- guiding slideways (21, 22) surrounding the edges of the card and positioning it with respect to the contact elements in the direction of the deflection to which the contact elements are submitted during insertion of the card, as well as in the transversal direction, characterized in that the contact frame (1) further comprises two extensions (17, 18) prolonging the substance of said inner frame (7) which extend laterally in the direction of the lateral edges of the card and beyond these edges, these two extensions carrying each means (6, 19, 20) for defining the position of the two guiding slideways (21, 22).

2. An IC card reader according to claim 1, characterized in that the extensions (17, 18) are perforated, at least in part.

3. An IC card reader according to claim 1 or 2, characterized in that the slideways (21, 22) are integral with the substance of said contact frame (1).

4. An IC card reader according to claim 1 or 2, characterized in that the slideways (21, 22) are constituted by a piece added to each extension (17 or 18).

5. An IC card reader according to claim 1 or 2, characterized in that the slideways (21, 22) are in part integral with the substance of said contact frame (1) and in part made of a piece added to each extension.

6. An IC card reader according to claim 4 or 5, characterized in that said add-on pieces are integral with a part (23) covering said frame and constituting a lid which is assembled thereon.

7. An IC card reader according to claims 4 and 6, characterized in that the slideways (21, 22) are totally formed in the add-on part constituting the lid (23).

8. An IC card reader according to any one of claims 1 to 7, characterized in that said contact frame (1) carries an elongated resilient part (31) provided with a hooked end (34) suitable for being cammed away by the front edge of a card inserted in the reader, and for then pressing against the card and pushing it against said lid (23).

9. An IC card reader according to claim 8, characterized in that said elongated resilient part (31) is disposed between the contact elements (4) and the edge of the card which is closest thereto.

10. An IC card reader according to any one of claims 1 to 7, characterized in that said lid (23) carries an elongate resilient part (31) extending backwards from the front edge which is not reached by the card and provided with a profiled end (34) being cammed away before the front edge of a card inserted into the reader, then pressing against the card and pushing it against said lid (23).

11. An IC card reader according to claim 10, characterized in that said elongate resilient part is fixed to the lid such as to be placed between the contact elements (4) and the edge of the card closest thereto.

12. An IC card reader according to any one of the preceding claims, characterized in that said contact frame (1) carries a moving contact blade (26) and a fixed contact blade (28) of an end-of-stroke contact (5) disposed on the front edge of said frame which is not reached by said card, except for a portion of the moving blade against which the card comes into abutment when it reaches the end of its stoke.

## Patentansprüche

1. IC-Kartenleser mit:
- einem einen mit Fenstern (8, 9, 10) versehenen Innenrahmen (7) bildenden Kontaktrahmen aus einem Isoliermaterial, das auf Kontaktelemente (4) zur elektrischen Verbindung mit der IC-Karte aufgegossen ist, um sie in den Fenstern anzuordnen, und
- Führungsgleitschienen (21, 22), die die Ränder der Karte einschließen und die Karte in Bezug auf die Kontaktelemente in Richtung der von den Kontaktelementen bei Einführung der Karte erfahrenen Ablenkung sowie in Querrichtung positionieren, dadurch gekennzeichnet, daß der Kontaktrahmen (1) weiter zwei Flügel (17, 18) aufweist, die das Material dieses Innenrahmens (7) verlängern und sich seitlich in Richtung der Seitenränder der Karte und über diese Ränder hinaus erstrecken, wobei diese beiden Flügel je Mittel (6, 19, 20) zur Definition der Position der beiden Führungs-Gleitschienen (21, 22) tragen.

2. IC-Kartenleser nach Anspruch 1, dadurch gekennzeichnet, daß die Flügel (17, 18) zumindest teilweise durchbrochen sind.

3. IC-Kartenleser nach Anspruch 1 oder 2, dadurch gekennzeichnet, daß die Gleitschienen (21, 22) im Material des Kontaktrahmens (1) ausgebildet sind.

4. IC-Kartenleser nach Anspruch 1 oder 2, dadurch gekennzeichnet, daß die Gleitschienen (21, 22) aus einem an jeden Flügel (17 oder 18) angesetzten Teil bestehen.

5. IC-Kartenleser nach Anspruch 1 oder 2, dadurch gekennzeichnet, daß die Gleitschienen (21, 22) teilweise aus dem Material des Kontaktrahmens (1) und teilweise aus einem an jeden Flügel angesetzten Teil bestehen.

6. IC-Kartenleser nach Anspruch 4 oder 5, dadurch gekennzeichnet, daß die angesetzten Teile zu einem Bauteil (23) gehören, das den Rahmen bedeckt und einen auf diesem liegenden Deckel bildet.

7. IC-Kartenleser nach den Ansprüchen 4 und 6, dadurch gekennzeichnet, daß die Gleitschienen (21, 22) vollständig in dem einen Deckel (23) bildenden angesetzten Teil ausgebildet sind.

8. IC-Kartenleser nach einem beliebigen der Ansprüche 1 bis 7, dadurch gekennzeichnet, daß der Kontaktrahmen (1) ein längliches elastisches Bauteil (31) trägt, das ein gepfeiltes Ende (34) enthält, welches vor der Vorderkante einer in den Leser eingeführten Karte zurückweicht und dann auf der Karte aufliegt und diese gegen den Deckel (23) drückt.

9. IC-Kartenleser nach Anspruch 8, dadurch gekennzeichnet, daß das elastische längliche Bauteil (31) zwischen den Kontaktelementen (4) und dem diesen nächstliegenden Rand der Karte angeordnet ist.

10. IC-Kartenleser nach einem beliebigen der Ansprüche 1 bis 7, dadurch gekennzeichnet, daß der Deckel (23) ein elastisches längliches Bauteil (31) trägt, das sich vom Vorderrand des Deckels, den die Karte nicht erreicht, nach hinten erstreckt und ein gepfeiltes Ende (34) aufweist, das vor der Vorderkante einer in den Leser eingesteckten Karte zurückweicht und dann auf der Karte aufliegt und diese gegen den Deckel (23) drückt.

11. IC-Kartenleser nach Anspruch 10, dadurch gekennzeichnet, daß das längliche elastische Bauteil so am Deckel befestigt ist, daß es sich zwischen den Kontaktelementen (4) und dem diesen nächstliegenden Rand der Karte befindet.

12. IC-Kartenleser nach einem beliebigen der vorhergehenden Ansprüche, dadurch gekennzeichnet, daß der Kontaktrahmen (1) eine bewegliche Kontaktzunge (26) und eine feststehende Kontaktzunge (28) eines Endkontakts (5) trägt, der an derjenigen Vorderkante des Rahmens liegt, die von der Karte nicht erreicht wird, mit Ausnahme eines Teils der beweglichen Zunge, auf die die Karte drückt, wenn sie in ihre Endstellung gelangt.
